# EUROPÄISCHE PATENTSCHRIFT

(11) **EP 0 521 322 B1**
(45) Veröffentlichungstag und Bekanntmachung des Hinweises auf die Patenterteilung: **05.04.1995**
(21) Anmeldenummer: 92109889.3
(22) Anmeldetag: 12.06.1992
(51) Int. Cl.: H02G 9/06

(54) **Aus zwei Halbschalen bestehndes Rohr**
Pipe comprising two half-shells
Tuyau composé de deux demi-coquilles

(30) Priorität: 04.07.1991 DE 4122193; 05.06.1992 DE 4218526
(43) Veröffentlichungstag der Anmeldung: 07.01.1993
(73) Patentinhaber: THYSSEN POLYMER GMBH, 81671 München (DE)
(72) Erfinder: Bauer, Peter, W-8441 Konzell (DE); Helf, Walter, W-8440 Straubing (DE)

(56) Entgegenhaltungen:
- DE-A- 2 304 852
- DE-A- 3 302 339
- DE-U- 9 001 931

## Beschreibung

Die Erfindung betrifft ein aus zwei Halbschalen bestehendes Rohr, gemäß dem Oberbegriff des Anspruches 1.

Derartige, aus zwei Halbschalen bestehende Rohre, die als Reparaturstücke von Schutzrohren für Kabel oder dgl. eingesetzt werden, werden wie aus der DE PS 33 02 339 hervorgeht abgedichtet, indem jede Halbschale auf einer Längsseite eine hinterschnittene nutförmige Kammer mit einer zerstörbaren Abdeckung besitzt, innerhalb der so gebildeten Kammer ein Dichtelement verläuft und auf der gegenüberliegenden Längsseite der Halbschale, eine widerhakenförmige Feder vorhanden ist, die in die nutförmige Kammer der jeweiligen anderen Halbschale eingedrückt und somit mit dieser dichtend verrastet ist.

Nach der Abdeckung mit Erde ist das Rohr an sich für lange Zeitabschnitte in Ruhe. Falls ein solches Rohr jedoch neubelegt oder auch beschädigt wird, beispw. bei Baggerarbeiten etc., muß das aus zwei Halbschalen bestehende Reparaturstück eingesetzt werden. Um nun ein solches beschädigtes Rohr wieder mit Kabeln belegen zu können, muß es entweder ausgegraben, was sehr aufwendig ist, oder aber, das bzw. die Kabel in das mit Erdreich überdeckte Rohr nachträglich eingezogen werden. Dazu wird ein Stopfen in das Rohrende eingeführt, an dem das Kabel befestigt ist. Anschließend wird das Rohrende verschlossen und Luft unter Druck bis zu ca. 10/bar eingepreßt, wodurch der Stopfen mitsamt dem befestigten Kabel durch das Rohr geblasen wird. Diese Maßnahme hat zur Folge, daß das Rohr sich erheblich dehnt und die in der Nut der anderen Halbschale befindliche Feder, sich von dem Dichtelement abheben kann, so daß die unter Druck stehende Luft im Inneren des Rohres aus demselben entweichen kann und der Stopfen mit dem Kabel im Rohr hängenbleibt.

Hier will die Erfindung Abhilfe schaffen. Die Erfindung, wie sie in dem Anspruch 1 gekennzeichnet ist, löst die Aufgabe, ein aus zwei Halbschalen bestehendes Rohr zu schaffen, das auch bei der Beaufschlagung mit höherem Innendruck, gas- und wasserdicht bleibt.

Die mit der Erfindung erzielten Vorteile liegen insbesondere in der Dichtheit der Verbindung der beiden Halbschalen des Rohres selbst unter einer durch Dehnung der Rohrwandung hervorgerufenen Zugbeanspruchung der Verbindung bei Anstieg des Innendruckes im Rohr und weiterhin in der einfachen Handhabung und wirtschaftlichen Herstellung einer solchen Rohrverbindung. Weiterbildungen der Erfindung sind in den abhängigen Ansprüchen angegeben.

Die Erfindung ist anhand der nachstehend aufgeführten Ausführungsbeispiele erläutert:

Es zeigt:
- Fig. 1: Ein aus zwei Halbschalen zusammengesetztes Rohr im Schnitt,
- Fig. 2: den Teilbereich "X" der Fig. 1 im Schnitt,
- Fig. 3-4: Ausführungsvarianten der Fig. 2
- Fig. 5-7: weitere Ausführungsvarianten.

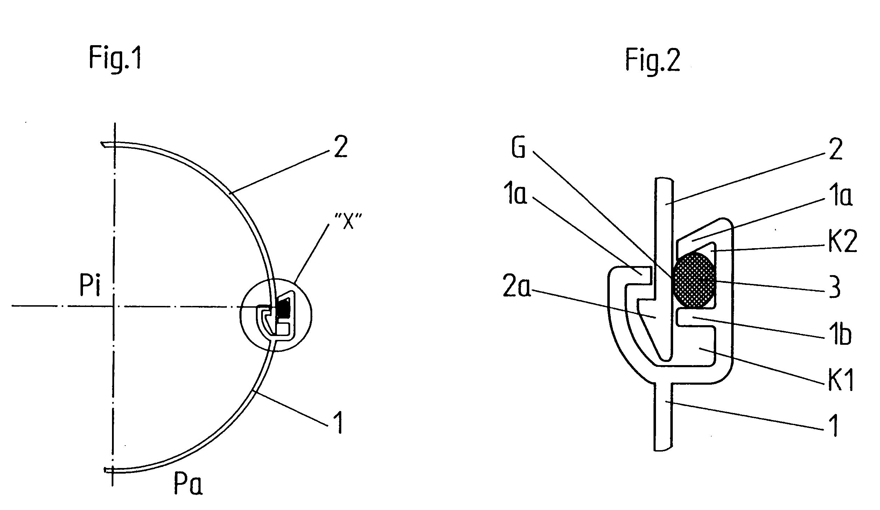

Die Fig. 1 läßt die Darstellung eines geteilten, aus zwei Halbschalen bestehenden Schutzrohres erkennen, bei dem in dem Bereich "X" eine dichte Verbindung zwischen den beiden Halbschalen vorhanden ist. Der in dem im Inneren des Rohres 1,2 herrschende Druck ist mit **Pi** und der äußere Druck mit **Pa** bezeichnet. Der Druck **Pi** sei größer als **Pa**.

Die Fig. 2 zeigt in dem Bereich "X" der Fig. 1 die untere Halbschale des Rohres, die mit 1 und die obere mit 2 bezeichnet ist. Die untere Halbschale 1 mündet in eine Nut^{K}, deren Wandung mit 1a bezeichnet ist und zwei Kammern K1 und K2 bildet. Diese Kammern sind durch einen Steg 1b voneinander getrennt. Die Kammer K1 dient zur Aufnahme des widerhakenförmigen Fortsatzes 2a der oberen Halbschale 2, während die Kammer K2 zur Aufnahme eines Dichtelementes 3 oder dgl. dient. Beim Eindrücken der oberen Halbschale 2 in die Kammer K1 bewegt sich der linke Fortsatz der Wandung 1a nach außen und federt nach Durchdringen des widerhakenförmigen Fortsatzes wieder zurück, so daß letzterer mit etwas Spiel verrastet ist. Dieses Spiel ist notwendig, um eine gewisse Dehnung des Rohres bei Druckbeaufschlagung aufzufangen.

Die Rückseite des widerhakenförmigen Fortsatzes 2a gleitet dabei an der äußeren Flanke des Dichtelementes 3 entlang, die sich in der Kammer K2 befindet und beim Eindrücken des widerhakenförmigen Fortsatzes 2a leicht komprimiert wird. Bei Erhöhung des Druckes **Pi** werden sich die beiden Halbschalen 1,2 dehnen, so daß der widerhakenförmige Fortsatz 2a eine Aufwärtsbewegung durchführt, bis er an die Rast stößt. Dabei bleibt die Dichtwirkung des Dichtelementes 3 voll erhalten, da es sich dabei um eine vorbeigleitende Bewegung der Gleitfläche G der Feder 2 senkrecht zur Kraftwirkung des verformten Dichtelementes 3 handelt und nicht, wie Halbschalenrohre gem. dem Stand der Technik, der widerhakenförmige Fortsatz 2a sich von der Dichtelement abheben kann. Das Dichtelement 3 befindet sich dabei außerhalb der Kraftlinien, die senkrecht noch innerhalb der Halbschale 2 über den widerhakenförmigen Fortsatz 2a in die Wandschale 1 verlaufen.

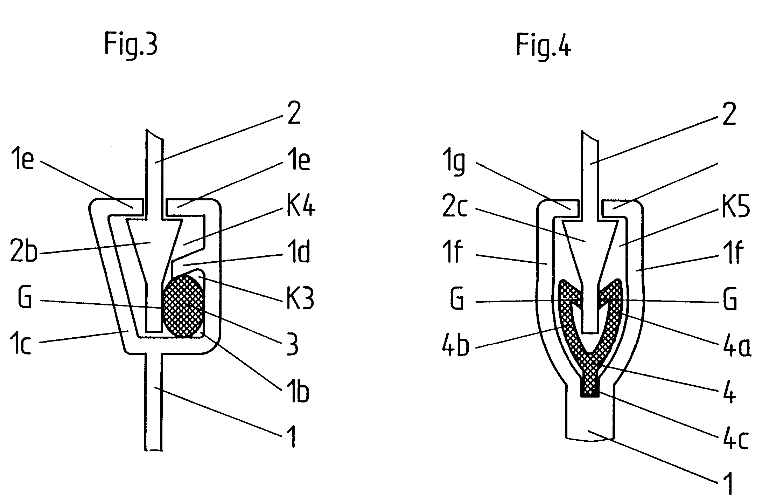

Eine Ausführungsvariante der Fig. 2 zeigt Fig. 3. Dort ist der widerhakenförmige Fortsatz 2b der Halbschale 2 doppelseitig ausgeführt und verrastet mit den Fortsätzen 1e der Nutwandung 1c. Ein Fortsatz 1d erstreckt sich in das Innere der Nut, so daß zwei Kammern K3 für das Dichtelement 3 und K4 für den widerhakenförmigen Fortsatz 2b gebildet werden. Die Funktion entspricht der der Fig. 2.

Eine weitere Ausführungsvariante ist in Fig. 4 gezeigt. Dabei ist eine symmetrisch, im Schnitt etwa tulpenförmig ausgebildete Nut, aus der Stirnseite der Wand der Halbschale 1 geformt, die mit 1f bezeichnet ist und die Kammer K5 bildet. Diese Kammer K5 dient sowohl zur Aufnahme des widerhakenförmigen Fortsatzes 2c als auch des Dichtelementes.

Das Dichtelement 4 ist im Schnitt kelchförmig ausgebildet und besitzt am oberen Ende der Wandung 4a eine Einbuchtung 4b mit einer Öffnung, in die der widerhakenförmige Fortsatz 2c eintaucht und ggf. einen Stiel 4c, der in eine Rille des Bodens der Kammer K5 eingesetzt ist. Die Funktion entspricht ebenfalls der der Fig. 2, nur mit dem Unterschied, daß der widerhakenförmige Fortsatz 2d hierbei beidseitig umfaßt, also doppelseitig abgedichtet ist.

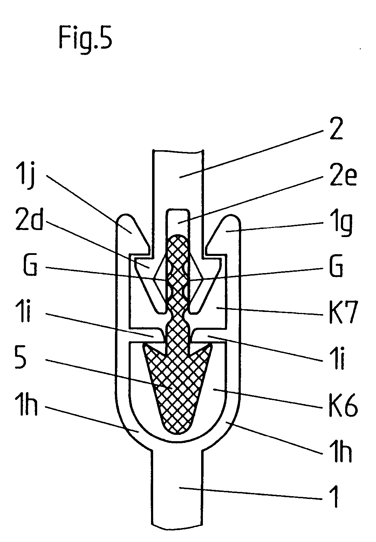

Fig. 5 zeigt eine weitere Ausführungsvariante der Erfindung, bei der die Nut auf der Stirnseite der Halbschale 1 durch zwei sich gegenüberliegende Stege **1i** in zwei Kammern K6 und K7 geteilt ist. Ein Dichtelement 5 befindet sich mit seinem unteren Teil in der Kammer K6, während sein stegartiger Fortsatz, der zusätzlich profiliert sein kann, durch den Spalt zwischen den beiden Stegen **1i** in die obere Kammer K7 ragt, wo er neben den widerhakenförmigen Fortsatz 2d und 2e, der etwa in der Mitte geschlitzt ist, ragt.

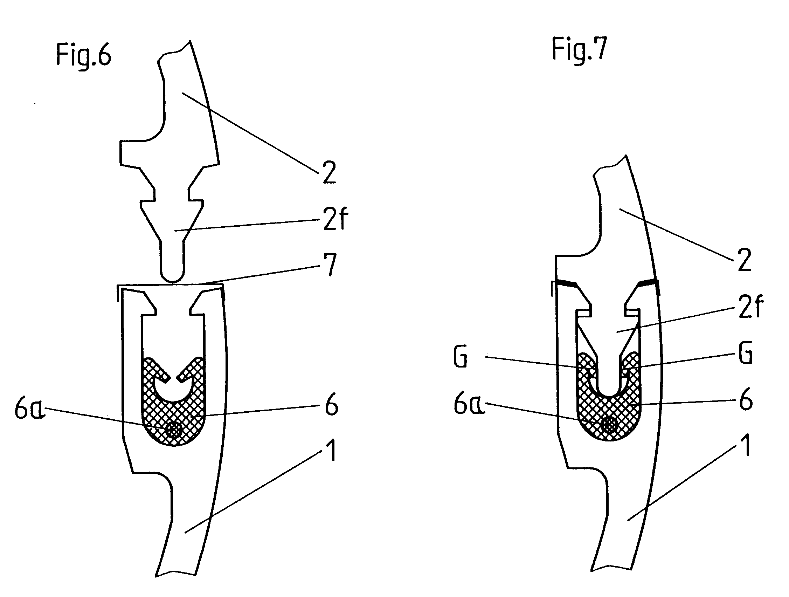

Die Nut kann beispielsweise zum Schutz vor Verschmutzung in bekannter Weise mittels einer zerstörbaren Abdeckung (7) werkseitig verschlossen sein (Fig. 6).

Das Dichtelement 6 kann, wie in den Abbildungen 6 und 7 dargestellt, aus Abschnitten unterschiedlicher Shorehärte oder mit einer oder mehreren Armierungen 6a versehen sein. Auch bei dieser Ausführungsvariante ist die Bewegungsrichtung der Gleitfläche G stets senkrecht zur Kraftwirkung des verformten Dichtelementes 6.

## Patentansprüche

1. Aus zwei Halbschalen (1,2) bestehendes Rohr, bei dem zwischen den Berührungsflächen der beiden Halbschalen (1,2) in einer Nut der Stirnseite der einen Halbschale (1) ein Dichtmittel (3-6) vorgesehen ist, in das eine widerhakenförmige Feder (2a-2f) der Stirnseite der anderen Halbschale (2) eingreift, wobei an wenigstens einer Wandung der Nut ein Fortsatz angeordnet ist, der die Feder (2a-2f) nach Durchdringen verrastet, **dadurch gekennzeichnet**, daß die Feder (2a) mindestens eine Gleitfläche (G) aufweist, die beim Einsetzen in die Nut und bei Bewegung innerhalb der Nut seitlich an der korrespondierenden Gleitfläche des Dichtelementes (3-6) entlanggleitet, wobei die Bewegungsrichtung der Gleitfläche der Feder (2a) stets senkrecht zur Kraftwirkung des verformten Dichtelementes (3-6) verläuft.

2. Aus zwei Halbschalen bestehendes Rohr nach Anspruch 1, **dadurch gekennzeichnet**, daß die Nut der Stirnseite eine erste Kammer (K1) für die Aufnahme der widerhakenförmigen Feder (2a) und eine weitere Kammer (K2) für die Aufnahme des Dichtelementes (3) besitzt, das neben der Feder (2a) angeordnet ist.

3. Aus zwei Halbschalen bestehendes Rohr nach Anspruch 1 und einen der folgenden, **dadurch gekennzeichnet**, daß das Dichtelement (3) als Dichtschnur ausgebildet ist.

4. Aus zwei Halbschalen bestehendes Rohr nach Anspruch 1 und einen der folgenden, **dadurch gekennzeichnet, daß** das Dichtelement (4) etwa kelchförmig mit nach innen gerichteten Stegen (4a, 4b) ausgebildet ist.

5. Aus zwei Halbschalen bestehendes Rohr nach Anspruch 4, **dadurch gekennzeichnet**, daß das Dichtelement (4) mit einem unteren Stiel (4c) in eine im Boden der Kammer (K5) vorgesehenen Rille eingesetzt ist.

6. Aus zwei Halbschalen bestehendes Rohr nach Anspruch 1 und einen der folgenden, **dadurch gekennzeichnet**, daß der widerhakenförmige Fortsatz (2) geschlitzt ist und das Dichtelement (5) in den zwischen den beiden Teilen (2d) dieses widerhakenförmigen Fortsatzes verbleibenden Schlitz (2e) eintaucht.

7. Aus zwei Halbschalen bestehendes Rohr nach Anspruch 1 und einen der folgenden, **dadurch gekennzeichnet, daß** das Dichtelement (6) aus Abschnitten unterschiedlicher Shorehärten besteht.

8. Aus zwei Halbschalen bestehendes Rohr nach Anspruch 1 und einen der folgenden, **dadurch gekennzeichnet,** **daß** das Dichtelement (6) mindestens eine Armierung (6c) aufweist.

9. Aus zwei Halbschalen bestehendes Rohr nach Anspruch 1 und einen der folgenden, **dadurch gekennzeichent, daß** die Nut mit einer zerstörbaren Abdeckung (7) versehen ist.

## Claims

1. Conduit consisting of two shells (1, 2), said conduit being provided with a sealing means (3-6) between the contact faces of both said shells (1, 2) in a groove of the front side of one shell (1), a barb-shaped spring (2a-2f) of the front side of the other shell (2) engaging into said conduit, an extension being arranged on at least one wall of said groove which catches said spring (2a-2f) after penetration, **characterized in that** said spring (2a) has at least one sliding face (G) which slides laterally past the corresponding sliding face of said sealing means (3-6) when being inserted into said groove and when moving within said groove, the direction of movement of the sliding face of said spring (2a) extending always vertical to the dynamic effect of the deformed sealing means (3-6).

2. Conduit consisting of two shells according to claim 1, **characterized in that** said groove of the front side has a first compartment (K1) for taking up said barb-shaped spring (2a) and another compartment (K2) for taking up said sealing means (3) which is arranged beside said spring (2a).

3. Conduit consisting of two shells according to claim 1 and one of the subsequent claims, **characterized in that** said sealing means (3) is designed as a packing cord.

4. Conduit consisting of two shells according to claim 1 and one of the subsequent claims, **characterized in that** said sealing means (4) has an approximately bell-shaped design and its webs (4a, 4b) are directed to the inside.

5. Conduit consisting of two shells according to claim 1 and one of the subsequent claims, **characterized in that** said sealing means (4) is inserted with a lower stem (4c) into a channel provided in the bottom of said compartment (K5).

6. Conduit consisting of two shells according to claim 1 and one of the subsequent claims, **characterized in that** said barb-shaped extension (2) is slitted and said sealing element (5) plunges into the slit (2e) remaining between both parts (2d) of said barb-shaped extension.

7. Conduit consisting of two shells according to claim 1 and one of the subsequent claims, **characterized in that** said sealing means (6) consists of sections of different Shore hardness grades.

8. Conduit consisting of two shells according to claim 1 and one of the subsequent claims, **characterized in that** said sealing means (6) is provided with at least one reinforcement (6c).

9. Conduit consisting of two shells according to claim 1 and one of the subsequent claims, **characterized in that** said groove is provided with a destroyable cover (7).

## Revendications

1. Tuyau composé de deux semi-coques (1,2), sur lequel un moyen d'étanchéification (3-6) est prévu entre les plans de contact des deux semi-coques (1,2) dans une rainure de la face avant de l'une des semi-coques (1), dans lequel s'engage un ressort (2a-2f) en forme de barbe de la face avant de l'autre semi-coque (2), un prolongement étant disposé au moins à une paroi de la rainure, qui enclenche le ressort (2a-2f) après sa pénétration, **caractérisé en ce que** le ressort (2a) présente au moins une surface de glissement (G), qui glisse le long de la surface de glissement correspondante de l'élément d'étanchéification (3-6) lors de la mise en place dans la rainure et lors du mouvement à l'intérieur de la rainure, le sens du mouvement de la surface de glissement du ressort (2a) étant toujours vertical par rapport à l'effet de force de l'élément d'étanchéification (3-6) déformé.

2. Tuyau composé de deux semi-coques selon la revendication 1, **caractérisé en ce que** la rainure de la face avant porte une première cavité (K1) pour recevoir le ressort en forme de barbe (2a) et une autre cavité (K2) pour recevoir l'élément d'étanchéification (3), disposé à côté du ressort (2a).

3. Tuyau composé de deux semi-coques selon la revendication 1 et l'une des suivantes, **caractérisé en ce que** l'élément d'étanchéification (3) est conçu comme cordon étanche.

4. Tuyau composé de deux semi-coques selon la revendication 1 et l'une des suivantes, **caractérisé en ce que** l'élément d'étanchéification (4) est conçu en forme de vase avec des arêtes (4a, 4b) orientées vers l'intérieur.

5. Tuyau composé de deux semi-coques selon la revendication 4, **caractérisé en ce que** l'élément d'étanchéification (4) est placé avec une tige inférieure (4c) dans une fente prévue dans le fond de la cavité (K5).

6. Tuyau composé de deux semi-coques selon la revendication 1 et l'une des suivantes, **caractérisé en ce que** le prolongement (2) en forme de barbe est fendu et que l'élément d'étanchéification (5) plonge dans la fente (2e) laissée entre les deux parties (2d) de ce prolongement en forme de barbe.

7. Tuyau composé de deux semi-coques selon la revendication 1 et l'une des suivantes, **caractérisé en ce que** l'élément d'étanchéification (6) se compose de sections de duretés Shore diverses.

8. Tuyau composé de deux semi-coques selon la revendication 1 et l'une des suivantes, **caractérisé en ce que** l'élément d'étanchéification (6) présente au moins une armature (6c).

9. Tuyau composé de deux semi-coques selon la revendication 1 et l'une des suivantes, **caractérisé en ce que** la rainure est pourvue d'un recouvrement (7) destructible.
